# EUROPÄISCHE PATENTSCHRIFT

(11) **EP 1 021 489 B1**
(45) Veröffentlichungstag und Bekanntmachung des Hinweises auf die Patenterteilung: **09.03.2005**
(21) Anmeldenummer: 98950066.5
(22) Anmeldetag: 22.09.1998
(51) Int. Cl.: C09D 5/34

(54) **MEHRKOMPONENTEN-STEINKITT**
MULTI-CONSTITUENT STONE PUTTY
MASTIC A PIERRE A PLUSIEURS COMPOSANTS

(30) Priorität: 24.09.1997 DE 19741997; 18.10.1997 DE 19746170
(43) Veröffentlichungstag der Anmeldung: 26.07.2000
(73) Patentinhaber: Akemi Chem.-Techn. Spezialfabrik Erich Höntsch GmbH, 90451 Nürnberg (DE)
(72) Erfinder: SCHLINGELHOFF, Peter, D-85131 Pollenfeld (DE); KIRSCHNER, Willibald, D-91171 Euerwang (DE); ZIMMERMANN, Dieter, D-90579 Langenzenn (DE)
(74) Vertreter: LOUIS- PÖHLAU- LOHRENTZ
(86) Internationale Anmeldenummer: PCT/EP1998/006027
(87) Internationale Veröffentlichungsnummer: WO 1999/015594

(56) Entgegenhaltungen:
- EP-A- 0 744 447
- EP-A- 0 781 732
- PATENT ABSTRACTS OF JAPAN vol. 018, no. 525 (C-1257), 5. Oktober 1994 & JP 06 183807 A (SHOWA SHELL SEKIYU KK;OTHERS: 01), 5. Juli 1994

## Beschreibung

Die vorliegende Erfindung betrifft einen Mehrkomponenten-Steinkitt auf Basis von ungesättigten Polyesterharzen oder Acrylharzen, insbesondere zur maschinellen Verarbeitung, mit Pigmenten und Füll- und Strukturstoffen.

Ein derartiger Steinkitt ist z.B. aus dem Gebrauchsmuster DE-295 08 712 U1 oder EP-A-744447 bekannt und wird dort als Strukturkitt bezeichnet. Dieser Strukturkitt beruht im wesentlichen auf kalthärtenden Zweikomponenten-Polyesterharzen oder kalthärtenden Zweikomponenten-Epoxidharzen. Ein derartiger Mehrkomponenten-Steinkitt wird außer als Kittmasse auch als Fugenmaterial bzw. Ausbesserungs- oder Ausfüllmaterial für Kunst- oder Natursteine verwendet, wobei die ausgefüllten Fugen bzw. Stellen allerdings nach Aushärtung der Kittmasse im allgemeinen dem Steinmaterial noch durch Schleifen und Polieren angepaßt werden müssen.

Der aus dem Stand der Technik bekannte Mehrkomponenten-Steinkitt verfügt nachteiligerweise jedoch nur über eine mäßige Verarbeitbarkeit, weil sich bereits nach einer gewissen Lagerzeit ein kaum mehr homogenisierbarer Bodensatz bildet.

Weitere Nachteile sind eine geringere Lagerstabilität, eine mäßige Stabilität der Mischung der Komponenten und eine langsamere Durchhärtung trotz kürzerer Verarbeitungszeit.

Es ist daher Aufgabe der vorliegenden Erfindung einen Mehrkomponenten-Steinkitt bereitzustellen, der leichter zu verarbeiten ist, wenigstens einen Teil der aus dem Stand der Technik bekannten Nachteile nicht aufweist und wirtschaftlich herstellbar ist, sowie möglichst mit gleichbleibender Qualität einsetzbar und verarbeitbar ist.

Die vorliegende Aufgabe wird durch einen Systemkitt der eingangs beschriebenen Art dadurch gelöst, daß dieser aus drei Komponenten besteht, wobei Komponente I ein beschleunigter Steinkitt und Komponente II ein unbeschleunigter, wenigstens einen Stabilisator enthaltender Steinkitt ist und Komponente III wenigstens ein organisches Peroxid enthält.

Vorteilhaft ist dabei weiterhin, wenn die Komponente I und/oder die Komponente II weiterhin wenigstens ein rheologisches Additiv und/oder wenigstens ein Trocknungsadditiv enthält. Besonders bevorzugt ist es, wenn die Komponente III durch wenigstens ein in einem Weichmacher stabilisiertes organisches Peroxid, insbesondere Dibenzoylperoxid, gebildet wird.

Durch den erfindungsgemäßen Mehrkomponenten-Steinkitt ergibt sich der besondere Vorteil, daß nunmehr eine bessere maschinelle Verarbeitung möglich ist, wobei ein weiterer Vorzug darin liegt, daß ein konstantes und richtiges Mischungsverhältnis der Komponenten gewährt ist, ebenso wie eine gute Vermischung derselben. Dies führt insbesondere zu hervorragenden Schleif- und Poliereigenschaften des ausgehärteten Steinkitts wie er bei einer manuellen Verarbeitung kaum zu erzielen ist. Ein weiterer Vorteil ist die hervorragende Füllung kleinerer als auch größerer Löcher durch die automatische Spachtelung und die immer gleichbleibende Qualität, die nicht abhängig von der Qualifikation und Leistung der verarbeitenden Person ist.

Der erfindungsgemäße Mehrkomponenten-Steinkitt besitzt gegenüber den aus dem Stand der Technik bekannten Produkten auch eine wesentlich stabilere Konsistenz, d.h. es tritt ein wesentlich geringeres Aufrahmen und Absetzen auf. Ein nicht mehr dispergierbarer Bodensatz wird, wenn überhaupt, erst nach äußerst langer Lagerzeit gebildet. Weitere Vorteile sind eine bessere Lagerstabilität, sowie eine bessere Haltbarkeit der Mischung der Komponenten.

Bei der Verarbeitung des erfindungsgemäßen Mehrkomponenten-Steinkitts wird zuerst eine entsprechende Menge der Komponente III mit dem organischen Peroxid mit der Komponente II vermischt. Diese Mischung ist aufgrund des in Komponente II enthaltenen wenigstens einen Stabilisators mindestens für 3 Tage verarbeitungsstabil. Die Komponente I und die Mischung der Komponenten II und III werden bevorzugt in einem Mengenverhältnis von im wesentlichen 1:1 eingesetzt und verarbeitet. Bei einer maschinellen Verarbeitung werden die Komponente I und Mischung der Komponenten II und III jeweils in einen entsprechenden Vorratsbehälter gefüllt und durch Druckleitungen zur Verarbeitungsstelle gefördert, wo sie nach dem Austritt aus den Druckleitungen vermischt und verspachtelt werden.

Durch diese Verfahrensweise ist eine wesentlich gleichmäßigere Verteilung und Durchmischung der Komponenten gegeben, als dies bei den herkömmlichen Steinkitten möglich ist. Ein im Stand der Technik übliches Mischungsverhältnis von 100:1 bis 100:4 für die Mischung von Steinkitt und Initiator ist nämlich äußerst schwer zu realisieren. Bei der manuellen Verarbeitung verschätzt man sich meistens bei der Abmessung einer entsprechend ausreichenden Initiatormenge und weiterhin ist eine homogene Verteilung des Initiators in dem Steinkitt kaum zu erreichen. Diese Nachteile werden mit dem erfindungsgemäßen Mehrkomponenten-Steinkitt überwunden, wobei weiterhin eine längere Verarbeitungszeit als mit dem bekannten Steinkitt zur Verfügung steht. Überraschenderweise wird trotzdem eine schnellere Durchhärtung des Kitts erreicht, so daß die gespachtelte Steinoberfläche auch schneller einer Endbehandlung, d.h. einem Schleifen und Polieren zugeführt werden kann.

Besonders hervorzuheben ist ein spezielles flüssiges organisches Peroxid als Komponente III, das nach dem Vermischen der Komponenten zu einer weichen thixotropen Struktur der Mischung führt. Daraus resultiert eine hervorragende Spachtelkonsistenz, wobei das Einsinken des noch nicht ausgehärteten Kittes auch bei größeren Löchern vermieden, zumindest stark reduziert wird.

Bei einer bevorzugten Zusammensetzung des Mehrkomponenten-Steinkitts enthält die Komponente I
20 bis 60 Gew.-% Bindemittel
bis 5 Gew.-% Beschleuniger
0,5 bis 10 Gew.-% rheologisches Additiv
0 bis 5 Gew.-% anorganische und organische Pigmente
0 bis 70 Gew.-% anorganischer Füllstoffe
0 bis 30 Gew.-% Strukturstoffe und
0,1 bis 0,5 Gew.-% Trocknungsadditive.

Die Komponente II enthält dabei
20 bis 60 Gew.-% Bindemittel
bis 5 Gew.-% Stabilisator
0,5 bis 10 Gew.-% rheologisches Additiv
0 bis 5 Gew.-% anorganische und organische Pigmente
0 bis 70 Gew.-% anorganische Füllstoffe
0 bis 30 Gew.-% Strukturstoffe und
0,1 bis 0,5 Gew.-% Trocknungsadditive.

Die Komponente III besteht bevorzugt aus 50 Gew.-% Dibenzoylperoxid, welches in einem Weichmacher stabilisiert ist.

Als Bindemittel werden bei dem erfindungsgemäßen Mehrkomponenten-Steinkitt ungesättigte Polyesterharze oder Acrylharze vor oder in einem Monomer, wie z.B. Styrol, α-Methylstyrol, Hexandioldimethacrylat, Methylmethacrylat gelöst, verwendet. Die verwendeten ungesättigten Polyesterharze oder Acrylharze enthalten in der Komponente I einen Beschleuniger, wie z.B. N,N-Dimethyl-p-toluidin, N,N-Di-2-Hydroxyethyl-p-toluidin, Dimethylanilin oder ein Metall, wie Co, oder metallorganische Verbindungen, wie z.B. Co-Octoate. In der Komponente II sind Phenole oder Chinone als Stabilisatoren enthalten, wobei als Beispiel Verbindungen, wie Hydrochinon, t-Butylbrenzkatechin, p-Benzochinon, Naphthochinon und Chloranil genannt werden können.

Als rheologische Additive finden bei dem Mehrkomponenten-Steinkitt bevorzugt unmodifizierte oder mit organischen Gruppen, wie z.B. Alkylgruppen, modifizierte, gefällte oder hochdisperse Kieselsäuren, gehärtete oder nicht gehärtete Ricinusöl-Derivate, nicht oder organisch modifizierte Schichtsilikate und Polyamide Verwendung. Als Trocknungsadditive werden bevorzugt Paraffine oder von Paraffinen abgeleitete synthetische Derivate verwendet.

Als Füllstoffe stehen dem Fachmann eine ganze Reihe allgemein bekannter und auf diesem Gebiet verwendeter Füllstoffe zur Verfügung, wobei aber insbesondere Talkum, Schwerspat, Calcit, Dolomit, Quarzmehl, Aluminiumoxid oder -hydroxid und Kaolin bevorzugt sind. Geeigneterweise liegt die Korngröße dieser Füllstoffe im Bereich von 0,1 bis 150 µm.

Als sogenannte Strukturstoffe, mit denen eine bessere Anpassbarkeit an die große Variationsbreite der Natursteine ermöglicht wird, sind Glimmer, Perlglanzpigmente, Metalleffektpigmente sowie grobe Talkumsorten besonders zu erwähnen.

Die üblicherweise verwendeten Pigmente sind dem auf dem vorliegenden Gebiet tätigen Fachmann ebenfalls grundsätzlich bekannt und können aus einer großen Vielzahl natürlicher und künstlicher Pigmente, anorganischer, wie organischer Art ausgewählt werden. Hier sind in erster Linie z.B. Oxide von Titan, Eisen, Chrom, Kobalt, sowie Ruße als Beispiel für anorganische Pigmente zu nennen und Phthalocyanine sowie Azofarben als Beispiele für organische Pigmente. Diese werden bevorzugt verwendet.

Die vorliegende Erfindung wird anhand des nun folgenden Beispiels näher erläutert.

### Beispiel

### Komponente I:

350 g in Styrol gelöstes und ungesättigtes Polyesterharz wird mit 7 g Aminbeschleuniger, 9 g rheologischen Additiven, 0,7 g Titandioxid, 0,7 Eisenoxid-Pigmenten und 1,5 g Trocknungsadditiven vermischt und in einem Hochleistungsrührwerk dispergiert.

### Komponente II:

350 g in Styrol gelöstes ungesättigtes Polyesterharz wird mit 1 g Stabilisator, 9 g rheologischem Additiv, 0,7 g Titanoxid, 0,7 g Eisenoxid-Pigmenten und 1,5 g Trocknungsadditiven vermischt und in einem Hochleistungsrührwerk dispergiert.

### Komponente III:

Als dritte Komponente dient eine 50-%ige Mischung von Dibenzoylperoxid im Weichmacher, wobei das Dibenzoylperoxid zur Stabilisierung mit dem Weichmacher vermischt ist.

### Verarbeitung:

Zu der Komponente II werden 6 Gew.-% der Komponente III gegeben und beide Bestandteile werden gut miteinander vermischt. Diese Mischung ist für mindestens 3 Tage verarbeitungsstabil.

Zur weiteren Verarbeitung werden die Komponente I und die Mischung der Komponente II und III im Verhältnis 1:1 vermischt und verspachtelt. Dies kann manuell geschehen und auch maschinell.

Bei der maschinellen Verarbeitung wird die Komponente I in einen entsprechenden Druckbehälter gefüllt, ebenso wie die zuvor beschriebene Mischung der Komponenten II und III. über entsprechende Druckleitungen werden die Komponente I und die Mischung der Komponenten II und III dann an die Verarbeitungsstelle gefördert, wo sie aus den Leitungen austreten und vermischt und verspachtelt werden.

Die Mischung der Komponente I mit der Mischung der Komponenten II und III bleibt ca. 2 bis 3 Minuten verarbeitungsfähig und verhärtet nach weiteren 10 Minuten soweit, daß die gespachtelte Steinoberfläche geschliffen und poliert werden kann.

Aus diesem Beispiel ist ersichtlich, daß nur ein äußerst geringer Fehler bei der Abmessung des Initiators auftreten kann, weil insbesondere für die maschinelle Verarbeitung, spezielle, auf einander abgestimmte Verpackungsgrößen für die einzelnen Komponenten konfektioniert werden können und durch die Herstellung der Mischung der Komponente II mit dem Initiator, d.h. der Hartkomponente III, nur noch zwei etwa gleich große Volumina zur endgültigen Verarbeitung miteinander vermischt werden müssen, wodurch ein möglicher Fehler bei der Dosierung des Initiators in sehr geringen Grenzen gehalten wird. Außerdem ist auf diese Weise eine homogene Verteilung des Initiators in dem gesamten Steinkitt sichergestellt.

## Patentansprüche

1. Mehrkomponenten-Steinkitt auf der Basis von ungesättigten Polyesterharzen oder Acrylharzen, insbesondere zur maschinellen Verarbeitung, mit Pigmenten und Füll- und Strukturstoffen,
**dadurch gekennzeichnet,**
**daß** der Mehrkomponenten-Steinkitt aus drei Komponenten besteht, wobei Komponente I von einem Steinkitt gebildet ist, der einen Beschleuniger enthält, Komponente II von einem unbeschleunigten Steinkitt, der wenigstens einen Stabilisator enthält, und Komponente III wenigstens ein organisches Peroxid enthält.

2. Mehrkomponenten-Steinkitt gemäß Anspruch 1,
**dadurch gekennzeichnet,**
**daß** die Komponente I und/oder die Komponente II weiterhin wenigstens ein rheologisches Additiv und/oder wenigstens ein Trocknungsadditiv enthält bzw. enthalten.

3. Mehrkomponenten-Steinkitt gemäß Anspruch 1 oder 2,
**dadurch gekennzeichnet,**
**daß** die Komponente III durch wenigstens ein in einem Weichmacher stabilisiertes organisches Peroxid gebildet wird.

4. Mehrkomponenten-Steinkitt gemäß Anspruch 2 oder 3,
**dadurch gekennzeichnet,**
**daß** Komponente I und Komponente II jeweils
20 bis 60 Gew.-% Bindemittel,
0,5 bis 10 Gew.-% rheologisches Additiv,
0 bis 5 Gew.-% organische und/oder anorganische Pigmente,
0 bis 70 Gew.-% anorganische Füllstoffe,
0 bis 30 Gew.-% Strukturstoffe und
0,1 bis 0,5 Gew.-% Trocknungsadditiv
enthalten, wobei Komponente I bis 5 Gew.-% Beschleuniger enthält, während Komponente II bis 5 Gew.-% Stabilisator enthält.

5. Mehrkomponenten-Steinkitt gemäß einem der Ansprüche 2 bis 4,
**dadurch gekennzeichnet,**
**daß** eine oder mehrere Verbindungen ausgewählt aus unmodifizierter oder mit organischen Gruppen modifizierter, gefällter oder hochdisperser Kieselsäure, gehärteten oder nicht gehärteten Ricinusöl-Derivaten, nicht oder organisch modifzierten Schichtsilikaten und Polyamiden als rheologisches Additiv enthalten sind.

6. Mehrkomponenten-Steinkitt gemäß einem der vorhergehenden Ansprüche,
**dadurch gekennzeichnet,**
**daß** als Trocknungsadditiv Paraffine oder von diesen synthetisch abgeleitete Derivate enthalten sind.

7. Mehrkomponenten-Steinkitt gemäß einem der vorhergehenden Ansprüche,
**dadurch gekennzeichnet,**
**daß** als Füllstoff einer oder mehrere Talkum, Schwerspat, Calcit, Dolomit, Quarzmehl, Aluminiumoxid oder -hydroxid und Kaolin enthalten sind.

8. Mehrkomponenten-Steinkitt gemäß einem der vorhergehenden Ansprüche,
**dadurch gekennzeichnet,**
**daß** die Füllstoff-Anteilchengröße von 0,1 bis 150 µm besitzen.

9. Mehrkomponenten-Steinkitt gemäß einem der vorhergehenden Ansprüche,
**dadurch gekennzeichnet,**
**daß** Glimmer, Perlglanzpigment(e), Metalleffektpigment(e) und/oder grobe Talkumsorten als Strukturstoffe enthalten sind.

10. Mehrkomponenten-Steinkitt gemäß einem der vorhergehenden Ansprüche,
**dadurch gekennzeichnet,**
**daß** Komponente I tertiäre aromatische Amine, Metalle oder metallorganische Verbindungen als Beschleuniger enthält.

11. Mehrkomponenten-Steinkitt gemäß einem der vorhergehenden Ansprüche,
**dadurch gekennzeichnet,**
**daß** Komponente II Phenole und/oder Chinone als Stabilisatoren enthält.

12. Mehrkomponenten-Steinkitt gemäß einem der vorhergehenden Ansprüche,
**dadurch gekennzeichnet,**
**daß** Komponente III Dibenzoylperoxid als organisches Peroxid enthält.

13. Verwendung eines Mehrkomponenten-Steinkitts gemäß einem der Ansprüche 1 bis 12,
**dadurch gekennzeichnet,**
**daß** zuerst eine Mischung der Komponenten II und III hergestellt wird, die nachfolgend mit einem etwa gleichen Volumen der Komponente I vermischt wird.

## Claims

1. Multicomponent stone putty based on unsaturated polyester resins or acrylic resins, in particular for machine processing, with pigments and fillers and structuring materials, **characterized in that** the multicomponent stone putty comprises three components, with component I being formed by a stone putty containing an accelerator, component II being formed by an unaccelerated stone putty containing at least one stabilizer and component III containing at least one organic peroxide.

2. Multicomponent stone putty according to Claim 1, **characterized in that** the component I and/or the component II additionally contains or contain at least one rheological additive and/or at least one drying additive.

3. Multicomponent stone putty according to Claim 1 or 2, **characterized in that** the component III is formed by at least one organic peroxide stabilized in a plasticizer.

4. Multicomponent stone putty according to Claim 2 or 3, **characterized in that** component I and component II each contain
from 20 to 60% by weight of binder,
from 0.5 to 10% by weight of rheological additive,
from 0 to 5% by weight of organic and/or inorganic pigments,
from 0 to 70% by weight of inorganic fillers,
from 0 to 30% by weight of structuring materials and
from 0.1 to 0.5% by weight of drying additive,
with component I containing up to 5% by weight of accelerator and component II containing up to 5% by weight of stabilizer.

5. Multicomponent stone putty according to any of Claims 2 to 4, **characterized in that** one or more compounds selected from among unmodified precipitated or finely divided silica and precipitated or finely divided silica modified with organic groups, cured and uncured castor oil derivatives, unmodified and organically modified sheet silicates and polyamides is/are present as rheological additive.

6. Multicomponent stone putty according to any of the preceding claims, **characterized in that** paraffins or derivatives derived synthetically from these are present as drying additive.

7. Multicomponent stone putty according to any of the preceding claims, **characterized in that** one or more materials selected from among talc, barite, calcite, dolomite, quartz flour, aluminium oxide, aluminium hydroxide and kaolin is/are present as filler.

8. Multicomponent stone putty according to any of the preceding claims, **characterized in that** the filler particle size is from 0.1 to 150 µm.

9. Multicomponent stone putty according to any of the preceding claims, **characterized in that** mica, pearl-effect pigment(s), metal-effect pigment(s) and/or coarse grades of talc is/are present as structuring materials.

10. Multicomponent stone putty according to any of the preceding claims, **characterized in that** component I contains tertiary aromatic amines, metals or organometallic compounds as accelerators.

11. Multicomponent stone putty according to any of the preceding claims, **characterized in that** component II contains phenols and/or quinones as stabilizers.

12. Multicomponent stone putty according to any of the preceding claims, **characterized in that** component III contains dibenzoyl peroxide as organic peroxide.

13. Use of a multicomponent stone putty according to any of Claims 1 to 12, **characterized in that** a mixture of the components II and III is prepared first and is subsequently mixed with an approximately equal volume of the component I.

## Revendications

1. Mastic à pierre à plusieurs composants à base de résines polyesters insaturées ou de résines acryliques insaturées, en particulier pour la mise en oeuvre mécanique, avec des pigments et des matières de charge et des matières structurales, **caractérisé en ce que** le mastic à pierre à plusieurs composants est formé par trois composants, le composant I étant formé par un mastic à pierre contenant un accélérateur, le composant II étant formé par un mastic à pierre non activé contenant au moins un stabilisateur et le composant III contenant au moins un peroxyde organique.

2. Mastic à pierre à plusieurs composants selon la revendication 1, **caractérisé en ce que** le composant I et/ou le composant II contient ou contiennent au moins un adjuvant rhéologique et/ou au moins un adjuvant de dessiccation.

3. Mastic à pierre à plusieurs composants selon la revendication 1 ou 2, **caractérisé en ce que** le composant III est formé par au moins un peroxyde organique stabilisé dans un plastifiant.

4. Mastic à pierre à plusieurs composants selon la revendication 2 ou 3, **caractérisé en ce que** le composant I et le composant II contiennent respectivement
20 à 60 % en poids de liant,
0,5 à 10 % en poids d'adjuvant rhéologique,
0 à 5 % en poids de pigments organiques et/ou anorganiques,
0 à 70 % en poids de matières de charge anorganiques,
0 à 30 % en poids de matières structurales et
0,1 à 0,5 % en poids d'adjuvants de dessiccation,
le composant I contenant jusqu'à 5 % en poids d'accélérateur, alors que le composant II contient jusqu'à 5 % en poids de stabilisateur.

5. Mastic à pierre à plusieurs composants selon l'une quelconque des revendications 2 à 4, **caractérisé en ce qu'**une ou plusieurs liaisons sont choisies parmi des acides siliques non modifiés ou modifiés avec des groupes organiques, précipités ou très dispersés, des dérivés d'huile de ricin durcis ou non durcis, des silicates sédimentaires non modifiés ou organiquement modifiés et des polyamides pour former les adjuvants rhéologiques.

6. Mastic à pierre à plusieurs composants selon l'une quelconque des revendications précédentes, **caractérisé en ce qu'**il contient des paraffines ou des dérivés synthétiques dérivés des paraffines pour former les adjuvants de dessiccation.

7. Mastic à pierre à plusieurs composants selon l'une quelconque des revendications précédentes, **caractérisé en ce que** les matières de charge contenues sont une ou plusieurs poudres de talc, la baryte sulfatée, la calcite, la dolomite, la poudre de quartz, l'oxyde d'aluminium ou l'hydroxyde d'aluminium et le kaolin.

8. Mastic à pierre à plusieurs composants selon l'une quelconque des revendications précédentes, **caractérisé en ce que** la granulométrie des particules de matières de charge se situe de 0,1 à 150 µm.

9. Mastic à pierre à plusieurs composants selon l'une quelconque des revendications précédentes, **caractérisé en ce que** les matières structurales contenues sont des micas, des pigments à reflet nacré, des pigments à effet métallique, ainsi que des sortes grossières de poudre de talc.

10. Mastic à pierre à plusieurs composants selon l'une quelconque des revendications précédentes, **caractérisé en ce que** le composant I contient en tant qu'accélérateur des amines aromatiques tertiaires, des métaux ou des liaisons organométalliques.

11. Mastic à pierre à plusieurs composants selon l'une quelconque des revendications précédentes, **caractérisé en ce que** les stabilisateurs contenus dans le composant II sont des phénols et/ou des quinones.

12. Mastic à pierre à plusieurs composants selon l'une quelconque des revendications précédentes, **caractérisé en ce que** le peroxyde organique utilisé, contenu dans le composant III, est du peroxyde de dibenzoyle.

13. Mastic à pierre à plusieurs composants selon l'une quelconque des revendications 1 à 12, **caractérisé en ce que** l'on réalise d'abord un mélange des composants II et III, auquel on ajoute ensuite le composant I dans un volume pratiquement identique.
